# FASCICULE DE BREVET EUROPEEN

(11) **EP 3 233 979 B1**
(45) Date de publication et mention de la délivrance du brevet: **29.04.2026**
(21) Numéro de dépôt: 15821127.6
(22) Date de dépôt: 15.12.2015
(51) Int. Cl.: C08H 8/00, C08J 5/18, C08L 89/00, C08L 89/06, C08L 97/02

(54) **PROCEDE DE PREPARATION D'UN MATERIAU POLYMERE A BASE DE MATIERE VEGETALE**
VERFAHREN ZUR HERSTELLUNG EINES POLYMERSTOFFES AUS PFLANZENMATERIAL
METHOD FOR PREPARING A POLYMER MATERIAL MADE FROM PLANT MATERIAL

(30) Priorité: 15.12.2014 FR 1462445
(43) Date de publication de la demande: 25.10.2017
(73) Titulaire: Université de Picardie Jules Verne, 80025 Amiens Cedex 1 (FR); Biomasse Environnement Systèmes, 77250 Episy (FR); Communauté de Communes Moret Seine et Loing, 77815 Moret-sur-Loing Cédex (FR)
(72) Inventeur: QUÉNEUDEC-T'KINT, Michèle, 35700 Rennes (FR); HOUESSOU, Koffi Justin, 93100 Montreuil (FR); MONTRELAY, Nicolas, 80080 Amiens (FR); MBOUMBA-MAMBOUNDOU, Léon Brice, 80090 Amiens (FR)
(74) Mandataire: Fédit-Loriot
(86) Numéro de dépôt international: PCT/FR2015/053513
(87) Numéro de publication internationale: WO 2016/097583

(56) Documents cités:
- WO-A1-2010/094856
- WO-A1-2013/152448
- US-A- 6 004 616
- XUEJING ZHENG ET AL: "Preparation and properties of sisal microfibril/gelatin biomass composites", COMPOSITES PART A: APPLIED SCIENCE AND MANUFACTURING, ELSEVIER SCIENCE PUBLISHERS B.V., AMSTERDAM, NL, vol. 43, no. 1, 30 August 2011 (2011-08-30), pages 45 - 52, XP028120602, ISSN: 1359-835X, [retrieved on 20110906], DOI: 10.1016/J.COMPOSITESA.2011.08.024
- HUANG X ET AL: "Biodegradable green composites made using bamboo micro/nano-fibrils and chemically modified soy protein resin", COMPOSITES SCIENCE AND TECHNOLOGY, ELSEVIER, UK, vol. 69, no. 7-8, 1 June 2009 (2009-06-01), pages 1009 - 1015, XP026021808, ISSN: 0266-3538, [retrieved on 20090123], DOI: 10.1016/J.COMPSCITECH.2009.01.014

## Description

La présente invention se rapporte à un procédé de préparation d'un matériau polymère à base de matière végétale comprenant des fibres végétales riches en composés lignocellulosiques, un matériau polymère obtenu par ce procédé et un film comprenant ledit matériau polymère. 1

Les composés lignocellulosiques sont composés de lignine, d'hémicellulose et de cellulose en proportions variables et sont présents dans la paroi des cellules végétales. Étant donné que les matières lignocellulosiques constituent un gisement renouvelable abondant, notamment dans le milieu agricole, ses utilisations sont de plus en plus étudiées.

On connait déjà un procédé de préparation d'une matière polymère à partir d'une biomasse comprenant divers matériaux lignocellulosiques. Le document de brevet US 6004616 divulgue un procédé selon lequel on mélange un matériau végétal et de l'eau comprenant de l'acide chlorhydrique puis on fait chauffer le mélange pour obtenir un extrait végétal. L'extrait est ensuite mélangé avec un agent plastifiant pour obtenir un film biodégradable. Bien que ce procédé permette d'obtenir un matériau polymère de manière simple et rapide, les propriétés mécaniques de ce matériau s'avèrent insuffisantes.

On connait également un procédé de préparation d'un composite à base de microfibres de sisal (Xuejing et al. ; Composites 43(2012)45-52*).* Selon ce procédé, des fibres naturelles de sisal ont subies un traitement alcalin dans une solution de soude puis ont été fibrillées par désintégration mécanique. Toutefois, selon ce procédé, le composite est préparé à partir des fibres nettoyées à l'aide d'un traitement alcalin. C'est-à-dire que, l'extrait aqueux produit au moment du traitement alcalin n'est pas utilisé mais seules les fibres restantes sont utilisées pour former le composite. Par conséquent, on observe une perte relativement importante des composés lignocellulosiques contenus dans les fibres naturelles de sisal après ce traitement alcalin.

Le document WO 2010 / 094 856 A1 divulgue un procédé d'obtention d'agro-matériaux permettant de valoriser les coproduits ou produits agricoles tels que poussières de défibrage du lin ou du chanvre, pulpes de betteraves, anas de lin, chenvotte, pailles, refus de silos, menues pailles de céréales et de colza, poussières de battage de céréales, pour la préparation de matériaux composites mettant en œuvre le jus pectique obtenu lors du pré-traitement des fibres lignocellulosiques et des protéines telles que la gélatine.

La présente invention vise à apporter une solution aux problèmes techniques décrits ci-dessus, et son but est, non seulement de proposer un procédé d'obtention d'un nouveau matériau polymère se substituant aux procédés déjà connus, mais aussi de répondre aux demandes croissantes de matériaux d'origine naturelle.

Aussi, un problème qui se pose et que vise à résoudre la présente invention est de proposer un nouveau procédé plus simple, moins coûteux, et peu polluant.

Pour résoudre ce problème, la présente invention propose un procédé de préparation d'un matériau polymère tel que défini à la revendication 1 comprenant les étapes suivantes : on fournit un matériau végétal comprenant des fibres végétales, lesdites fibres végétales présentant des parois végétales comprenant des celluloses, des hémicelluloses, des lignines, et des composés protéiques ; on broie ledit matériau végétal pour obtenir un broyat végétal; on hydrolyse ledit matériau végétal broyé, d'une part en immergeant ledit matériau dans un liquide présentant un pH compris entre 6,0 et 8,0 et d'autre part, en chauffant l'ensemble dudit liquide et du matériau végétal au moyen de micro-ondes de manière à le porter à une température d'au moins 35 °C, pour obtenir un extrait aqueux desdites fibres végétales; et on récupère ledit extrait aqueux desdites fibres végétales; ledit ensemble dudit liquide et du matériau végétal est chauffé à une puissance comprise entre 500 W et 900 W et entre 5 secondes et deux minutes. En outre, il comprend les étapes suivantes on récupère ledit extrait aqueux desdites fibres végétales et on ajoute audit extrait aqueux entre 8% et 20% en masse d' un agent gélifiant protéique comprenant au moins un polypeptide; et on chauffe le mélange dudit extrait aqueux et dudit agent gélifiant protéique.

Selon l'invention, on entend par « matériau végétal », un matériau végétal brut comprenant une structure fibrillaire. De préférence, les fibres comprennent des parois végétales comportant principalement de la cellulose, de l'hémicellulose, des lignines, des pectines et des composés protéiques. Le matériau végétal mis en œuvre est un broyat végétal. Ceci facilite l'extraction des matières contenues dans les fibres végétales.

De préférence, le matériau végétal est obtenu à partir du miscanthus. Le miscanthus présente un potentiel agronomique intéressant. Il peut produire des quantités importantes de biomasse lignocellulosique avec environ 20 à 30% d'intrants azotés en moins. De plus, il est souvent cultivé sur des terres non exploitables à des fins alimentaires, évitant ainsi toute compétition avec les cultures vivrières. Il s'agit d'une plante pérenne, ne nécessitant pas de labour sur les zones productrices ce qui favorise le stockage du carbone dans les sols.

De préférence, le matériau végétal est obtenu à partir de miscanthus, de lin, de betterave ou de blé. À titre d'exemple, le matériau végétal peut être un broyat de miscanthus, des anas de lin, des étoupes de lin, des pulpes de betterave, des produits ou coproduits de l'industrie du chanvre, du palmier, des coproduits céréaliers (pailles, menues pailles, balles) ou tout autre coproduit lignocellulosique issu des activités agricoles ou poussant à l'état sauvage.

Selon l'invention, on entend par « lignocellulose », une matière composée d'hémicellulose, de cellulose et de lignine en proportions variables.

Au sens de la présente invention, le terme « cellulose » désigne un polysaccharide linéaire, principal constituant des parois végétales, constitué de plusieurs groupes β-glucosyl liés entre eux par une liaison β-(1-4).

Au sens de la présente invention, les « hémicelluloses » désignent des polysaccharides alcalino-solubles présents dans des parois végétales. Les hémicelluloses diffèrent de la cellulose en ce qu'elles présentent de multiples façons selon lesquelles s'associent les motifs dans les hémicelluloses. À l'hydrolyse, elles sont aptes à libérer des hexoses (glucose, mannose, galactose), des pentoses (arabinose, xylose, apiose), des dérivés méthylés (rhamnose, fucose) ou des acides (acide glucuronique, acide acérique, etc.).

Selon l'invention, les « lignines » signifient des macromolécules résultant de la co-polymérisation de trois monomères : l'alcool coumarylique, l'alcool coniférylique et l'alcool sinapylique.

Au sens de la présente invention, les « pectines » sont constitués, d'homogalacturonanes (HG), de rhamnogalacturonane de type I (RG-I) et relativement peu de rhamnogalacturonane de type 2 (RG-II). Les HG (60% des pectines de la paroi végétale) sont constitués de polymères α (1-4) acide galacturonique. Les RG-I sont formés d'une répétition du motif disaccharidique [α (1-4) acide D-galacturonique - α (1-2) L-rhamnose]. Le squelette rhamnogalacturonique est ramifié par des arabinanes, galactanes ou des arabinogalactanes. Le RG-II comprend neufs résidus d'acides galacturoniques auxquels sont unies 4 chaines latérales. Ces chaines latérales contiennent des monosaccharides particuliers, tels que le D-apiose, le L-acérate, le 2-Omethyl L-fucose, le 2 Omethyl D-xylose, et le L-galactose. Ces différents sucres sont synthétisés au niveau de l'appareil de Golgi, et les molécules formées sont envoyées par exocytose vers la paroi où elles subiront une maturation par des enzymes pariétales telles que les pectines méthylestérases.

Les « composés protéiques » présents dans les parois végétales sont caractérisés par des séquences répétées d'acides aminés. Ces protéines sont classées en 4 familles : les extensines (glycoprotéines riches en hydroxyproline HRGP), les glycoprotéines riches en glycine (GRPs), les glycoprotéines riches en proline (PRPs) et les protéines arabinogalactanes (AGPs).

Au sens de la présente invention, on entend par « agent gélifiant protéique », un agent gélifiant d'origine animale ou végétale, d'une part comprenant au moins un polypeptide et d'autre part permettant de gélifier l'eau dans certaines conditions. De préférence, ledit polypeptide comprend de la lysine. À titre d'exemple, l'agent gélifiant peut être une gélatine commerciale à base de peau, d'os et/ou de cartilages de porc. On errajoute entre 8 et 20 % d'agent gélifiant en masse par rapport à l'extrait de fibres végétales.

Au sens de la présente invention, on entend par « liquide acide », un liquide dont le pH est inférieur à 7, par « liquide neutre », un liquide dont le pH est égal à 7 et par « liquide basique », un liquide dont le pH est supérieur à 7. De préférence, le liquide est une eau du réseau public d'alimentation en eau potable ; il est par conséquent bon marché. Cette eau peut également être traitée, par exemple déminéralisée. Le liquide et de préférence l'eau, peut être issu d'une autre source d'approvisionnement,
Ainsi, l'hydrolyse et le traitement thermique des fibres végétales permettent d'obtenir un extrait aqueux composé principalement des hémicellulose, tannins, celluloses composés pectiques et lignines.

Les composants polysaccharidiques et aromatiques contenus dans l'extrait de fibres végétales interagissent avec l'agent gélifiant protéique et améliorent les propriétés mécaniques du matériau. Le fait d'utiliser un agent gélifiant protéique entraîne le développement de réactions chimiques qui sont dues principalement aux groupements aminés libres, qui jouent un rôle important dans les réticulations intra et intermoléculaires entre les chaînes protéiques. Les composés protéiques compris notamment dans l'agent gélifiant mais aussi dans les fibres végétales commencent à présenter une structure désordonnée à 35-40°C. Dans cette structure, on trouve en solution un mélange de différentes fractions α, β, γ, en conformation de pelotes statiques. En présence de polysaccharides et lignines, présents dans les fibres végétales, les composés protéiques forment des structures tridimensionnelles, autrement dit une forme réticulée, et des chaînes constitutives longues sous l'effet de la chaleur, ce qui améliore la rigidité et la résistance du matériau polymère selon l'invention.

Par conséquent, on peut obtenir de manière simple des matériaux polymères aux caractéristiques mécaniques se situant dans la même gamme que de nombreux polymères pétrochimiques usuels en termes de résistance à la traction et en modules d'élasticité.

L'agent gélifiant peut être utilisé seul ou avec un agent plastifiant, tel que le glycérol pour moduler les caractéristiques mécaniques du matériau.

Avantageusement, outre l'agent gélifiant protéique, on peut ajouter de l'acétaldéhyde à l'extrait aqueux de fibres végétales. Ceci permet au matériau polymère d'éviter de se dissoudre rapidement dans l'eau, et d'améliorer son comportement vis-à-vis de l'eau. De manière avantageuse, on ajoute entre 5 et 20% d'acétaldéhyde en masse par rapport au mélange de l'extrait aqueux et l'agent gélifiant protéique, Ceci permet aux matériaux polymères de résister à l'eau.

Selon l'invention, l'extrait aqueux desdites fibres végétales peut être filtré avant de mélanger avec l'agent gélifiant protéique.

Selon l'invention, le mélange de l'extrait aqueux et l'agent gélifiant protéique peut être moulé dans une forme désirée puis séché à température ambiante jusqu'à ce que le mélange soit solidifié, par exemple entre 2 heures et 9 jours.

Selon l'invention, le mélange de l'extrait aqueux et de l'agent gélifiant protéique peut être solidifié dans un moule en silicone, ce qui permet de démouler le matériau polymère plus aisément et de diminuer le risque de générer des microfissures sur le matériau polymère. Par conséquent, on peut améliorer les propriétés mécaniques du matériau polymère.

On chauffe le mélange dudit extrait aqueux et dudit agent gélifiant protéique. Bien que le mélange puisse être chauffé par un moyen quelconque, il est préférable de le chauffer au moyen de micro-ondes.

Lorsqu'on immerge le matériau végétal, on incorpore une masse d'eau de manière à saturer entièrement les fibres en eau. À titre d'exemple, on peut ajouter 14g d'eau pour 1g de matière végétale.

L'ensemble du matériau végétal et du liquide est chauffé au moyen de micro-ondes. Le mélange est soumis à un temps de traitement et à une puissance donnée, les deux paramètres étant optimisés. Le chauffage par micro-ondes crée une pression élevée à l'intérieur des fibres végétales. Ceci a pour conséquence de modifier la structure physique des tissus végétaux et la structure cellulaire, ce qui permet une meilleure pénétration du liquide dans les tissus. Par conséquent, ce traitement thermique présente ainsi l'avantage de permettre d'extraire plus et plus vite que la méthode traditionnelle. L'irradiation par micro-ondes permet de produire une quantité suffisante d'extrait de fibres végétales. On chauffe l'ensemble du matériau végétal et du liquide pendant entre 5 secondes et 2 minutes à une puissance de 500 à 900 W, de préférence 750W, le temps étant adapté à la quantité de matière végétale.

Le liquide dans lequel on immerge le matériau végétal présente un pH compris entre 6,0 et 8,0, par exemple entre 6,5 et 7,5. L'extrait aqueux obtenu en milieu relativement neutre contient plus de cellulose et d'hémicelluloses que les extraits en milieu basique et acide, ce qui permet d'améliorer les propriétés mécaniques du matériau polymère.

D'autres particularités et avantages de l'invention ressortiront à la lecture de la description faite ci-après de modes de réalisation particuliers de l'invention, donnés à titre indicatif mais non limitatif, en référence à des exemples décrits ci-dessous.

### Premier Mode de réalisation selon l'invention

### Exemple 1 : Préparation de matériau polymère plastique selon l'invention

1g de miscanthus broyé à 1 mm est introduite dans 14 g d'eau du réseau à pH 7,3 et est maintenue en immersion jusqu'à saturation. L'ensemble du broyat et de l'eau est placé dans un four micro-ondes (Panasonic NN-Q533 WF) pendant 2 minutes à une puissance de 750W. Après filtration à l'aide d'un filtre Watman, on récupère une fraction solide constituée par les résidus de miscanthus et une fraction liquide comprenant de l'extrait de miscanthus constituant un extrait aqueux.

9 g d'extrait aqueux est additionné à 1g de gélatine (ACROS Organics^{™}) selon un rapport volumique eau/gélatine 9/1 et l'ensemble est soumis à une irradiation micro-ondes à une puissance de 750W pendant 18 secondes puis coulé dans des moules en forme d'éprouvettes de traction normalisées tapissées de toile téflon (film Téflon 250µm fourni par Plastimeuse). Le mélange durcit et est solidifié 45 minutes après le traitement aux micro-ondes et devient démoulable au bout de 48 heures. Les éprouvettes de traction sont ensuite maturées à température ambiante pendant une semaine pour obtenir un film plastique rigide selon l'invention.

### Exemple 2 : Préparation de matériau polymère plastique selon un exemple de référence

Un film plastique a été réalisé de la même manière que l'Exemple 1 sauf que l'eau du réseau a été ajustée à pH 2 en ajoutant de l'acide sulfurique concentré (pureté 95-98%)

### Exemple 3 : Préparation de matériau polymère plastique selon un exemple de référence

Un film plastique a été réalisé de la même manière que l'Exemple 1 sauf que l'eau du réseau a été ajustée à pH 12 en ajoutant une solution de soude.

### Exemple comparatif 1 : Préparation de matériau polymère plastique selon l'exemple comparatif

Un film plastique a été réalisé de la même manière que l'Exemple 1 sauf que l'extrait aqueux est remplacé par l'eau du réseau.

### Exemple 4 : Essai comparatif

Les éprouvettes de traction obtenues selon les Exemples 1 à 3, les Exemples 2 et 3 étant des exemples de référence, ainsi que l'Exemple comparatif 1 sont positionnées dans les mors d'un banc de traction et sont soumises à un effort de traction à vitesse de déformation constante jusqu'à leur rupture. La vitesse de déformation est de 2mm/min. La machine de traction utilisée est une Shimazu Autograph AG-10KNX équipée d'une cellule 10kN. Les caractéristiques mécaniques (contrainte maximale, allongement, et module d'élasticité) des exemples sont présentées dans le tableau 1.

**Tableau 1**

| Exemples | Contrainte max (MPa) | Allongement (%) | Module d'Young (MPa) |
|---|---|---|---|
| Exemple 1 | 69 ± 8,8 | 2,24 ± 0,15 | 4092 ± 545 |
| Exemple 2 | 35 ± 1,7 | 1,9 ± 0,23 | 2403 ± 283 |
| Exemple 3 | 50 ± 9,2 | 2,29 ± 0,42 | 2813 ± 176 |
| Exemple comparatif 1 | 28 ± 3,1 | 1 ± 0,12 | 3152 ± 263 |

Les résultats montrent que, à pH identique, les propriétés mécaniques des matériaux polymères selon l'invention sont supérieures à celles de l'exemple comparatif. Aucun effet significatif de dégradation thermique conduisant à une perte de masse ne se produit à des températures inférieures à 200 °C chez le matériau polymère selon l'invention. De plus, les matériaux polymères obtenus selon l'invention ne sont pas thermofusibles.

Au surplus, le matériau polymère issu de l'extrait de fibres végétales obtenu à un pH relativement neutre présente une quantité de polysaccharide plus importante, ce qui conduit les composés protéiques à des formes réticulées plus denses et des chaînes constitutives plus longues.

### Deuxième mode de réalisation selon l'invention

### Exemple 5 : Préparation de matériau polymère plastique selon l'invention

Après l'obtention d'un extrait aqueux de la même manière que l'Exemple 1, on ajoute 1 g de gélatine (eau/gélatine=9/1) dans laquelle on ajoute de l'acétaldéhyde pour que sa proportion finale soit 9/1/1 (eau/ gélatine/acétaldéhyde). Le mélange ainsi obtenu est chauffé aux micro-ondes à une puissance de 750W pendant 18 secondes puis coulé dans des moules en forme d'éprouvettes de traction normalisées tapissées de toile téflon. Les éprouvettes de traction sont maturées à l'air ambiant pendant 48 heures.

### Exemple 6 : Préparation de matériau polymère plastique selon un exemple de référence

Une éprouvette de traction en forme de film plastique a été réalisée de la même manière que l'Exemple 5 sauf que l'eau du réseau ayant servi à l'extraction a été ajustée à pH 2 en ajoutant de l'acide sulfurique concentré (pureté 95-98%).

### Exemple 7 : Préparation de matériau polymère plastique selon un exemple de référence

Une éprouvette de traction en forme de film plastique a été réalisée de la même manière que l'Exemple 5 sauf que l'eau du réseau ayant servi à l'extraction a été ajustée à pH 12 en ajoutant une solution de soude.

### Exemple 8 : Essai comparatif

Les éprouvettes de traction obtenues selon les Exemples 5 à 7, les exemples 6 et 7 étant des exemples de référence, sont positionnées dans les mors d'un banc de traction et sont soumises à un effort de traction à vitesse de déformation constante jusqu'à leur rupture. La vitesse de déformation est de 2mm/min. La machine de traction utilisée est une Shimazu Autograph AG-10KNX équipée d'une cellule 10kN. Les caractéristiques mécaniques (contrainte maximale, allongement, et module d'élasticité, résistance à l'eau) des exemples sont présentées dans le tableau 2.

**Tableau 2**

| Exemples | Contrainte max (MPa) | Allongement (%) | Module d'Young (MPa) | Durée dans l'eau |
|---|---|---|---|---|
| Exemple 5 | 53,73 ± 3,10 | 4,97 ± 0,81 | 2129,31 ± 37,55 | 4 jours |
| Exemple 6 | 56,18 ± 10,02 | 2,72 ± 0,19 | 2607,43 ± 381,90 | 4 jours |
| Exemple 7 | 44,23 ± 10,07 | 2,99 ± 1,25 | 2071,51 ± 237,10 | >1 semaine |

Les résultats montrent que la résistance à l'eau s'améliore en ajoutant de l'acétaldéhyde, notamment lorsque l'extrait de fibres végétales est obtenu à un pH basique. Dans le cas de l'exemple 7, l'intégrité du matériau se maintient au-delà d'une semaine. De même que dans l'exemple 4, aucune dégradation thermique significative n'apparait à des températures inférieures à 200°C et les matériaux obtenus ne sont pas thermofusibles.

### Troisième mode de réalisation selon l'invention

### Exemple 9 : Préparation de matériau polymère plastique selon l'invention

Après l'obtention du mélange de l'extrait aqueux et de la gélatine, on ajoute 1% en volume de glycérol au mélange en tant que plastifiant.

### Exemple 10 : Préparation de matériau polymère plastique selon un exemple de référence

Une éprouvette de traction en forme de film plastique a été réalisée de la même manière que l'Exemple 9 sauf que l'eau du réseau a été ajustée à pH 2 en ajoutant de l'acide sulfurique concentré (95-98%).

### Exemple 11 : Préparation de matériau polymère plastique selon un exemple de référence

Une éprouvette de traction en forme de film plastique a été réalisée de la même manière que l'Exemple 9 sauf que l'eau du réseau a été ajustée à pH 12 en ajoutant une solution de soude.

### Exemple 12 : Essai comparatif

Les essais de traction sont réalisés sur les éprouvettes selon les exemples 9 à 11, les exemples 10 et 11 étant des exemples de référence, de la même manière que l'Exemple 4 mais avec une vitesse de 20mm/mn. Les résultats obtenus sont présentés sur le tableau 3.

**Tableau 3**

| Exemples | Contrainte max (MPa) | Allongement (%) | Module d'Young (MPa) |
|---|---|---|---|
| Exemple 9 | 29 ± 2,00 | 3,7 ± 0,44 | 1484 ± 146,00 |
| Exemple 10 | 13 ± 1,90 | 5,9 ± 3,81 | 435 ± 34,00 |
| Exemple 11 | 15 ± 1,40 | 7,7 ± 3,68 | 501 ± 122,00 |

### Quatrième mode de réalisation selon l'invention

### Exemple 13 : Préparation de matériau polymère plastique selon l'invention

Des végétaux de nature différente (étoupes de lin, paille de blé, et pulpes de betteraves séchées et non compressées), ont été testés suivant le mode opératoire de l'exemple 1, à l'exception des moules qui sont en silicone.

### Exemple 14 : Essai comparatif

Les essais de traction sont réalisés sur les éprouvettes selon l'exemple 13 suivant la méthode de l'Exemple 4. Les résultats obtenus sont présentés sur le tableau 4.

**Tableau 4**

| Exemples | Contrainte max (MPa) | Allongement (%) | Module d'Young (MPa) |
|---|---|---|---|
| Etoupes de lin | 101,39 | 4,08 | 3702 |
| Paille de blé | 71,89 | 2,71 | 3516 |
| Pulpes de betteraves séchées | 83,84 | 3,66 | 3201 |

## Revendications

1. Procédé de préparation d'un matériau polymère comprenant les étapes suivantes :
- on fournit un matériau végétal comprenant des fibres végétales, lesdites fibres végétales présentant des parois végétales comprenant des celluloses, des hémicelluloses, des lignines, et des composés protéiques,
- on broie ledit matériau végétal pour obtenir un broyat végétal,
- on hydrolyse ledit matériau végétal broyé, d'une part en immergeant ledit matériau dans un liquide présentant un pH compris entre 6.0 et 8.0 et d'autre part, en chauffant l'ensemble dudit liquide et du matériau végétal au moyen de micro-ondes de manière à le porter à une température d'au moins 35 °C, pour obtenir un extrait aqueux desdites fibres végétales ;
**caractérisé en ce qu'**on chauffe ledit ensemble dudit liquide et du matériau végétal à une puissance comprise entre 500 W et 900 W et entre 5 secondes et deux minutes ;
et **en ce qu'**il comprend en outre les étapes suivantes :
- on récupère ledit extrait aqueux desdites fibres végétales et on ajoute audit extrait aqueux, entre 8% et 20% en masse d'un agent gélifiant protéique comprenant au moins un polypeptide ; et,
- on chauffe le mélange dudit extrait aqueux et dudit agent gélifiant protéique.

2. Procédé de préparation selon la revendication 1, **caractérisé en ce qu'**on filtre ledit extrait aqueux desdites fibres végétales avant d'ajouter l'agent gélifiant protéique.

3. Procédé de préparation selon la revendication 1 ou 2, **caractérisé en ce que** ledit matériau végétal est obtenu à partir de miscanthus, de lin, de betterave ou de blé.

4. Procédé de préparation selon l'une quelconque des revendications précédentes, **caractérisé en ce qu'**on ajoute en outre de l'acétaldéhyde audit extrait aqueux de fibres végétales.

5. Matériau polymère obtenu par un procédé selon l'une quelconque des revendications précédentes.

6. Film comprenant un matériau polymère obtenu par un procédé selon l'une quelconque des revendications 1 à 4.

## Patentansprüche

1. Verfahren zur Herstellung eines Polymermaterials, die folgenden Schritte umfassend:
- Bereitstellen eines Pflanzenmaterials, das Pflanzenfasern umfasst, wobei die Pflanzenfasern Pflanzenwände aufweisen, die Cellulosen, Hemicellulosen, Lignine und Proteinverbindungen umfassen,
- Zerkleinern des Pflanzenmaterials, um ein pflanzliches Mahlgut zu erhalten,
- Hydrolisieren des zerkleinerten Pflanzenmaterials, einerseits durch Eintauchen des Materials in eine Flüssigkeit, die einen pH-Wert aufweist, der zwischen 6,0 und 8,0 liegt, und andererseits durch Erhitzen der gesamten Flüssigkeit und des Pflanzenmaterials mittels Mikrowellen, um es auf eine Temperatur von mindestens 35 °C zu bringen, um einen wässrigen Extrakt der Pflanzenfasern zu erhalten;
**dadurch gekennzeichnet, dass** die gesamte Flüssigkeit und das Pflanzenmaterial mit einer Leistung, die zwischen 500 W und 900 W liegt, und 5 Sekunden bis zwei Minuten lang erhitzt werden;
**dadurch gekennzeichnet, dass** es weiter die folgenden Schritte umfasst:
- Zurückgewinnen des wässrigen Extrakts aus den Pflanzenfasern und Zusetzen zu dem wässrigen Extrakt zwischen 8 Ma.-% und 20 Ma.-% eines proteinhaltigen Geliermittels, das mindestens ein Polypeptid umfasst; und,
- Erhitzen des Gemisches aus dem wässrigen Extrakt und dem proteinhaltigen Geliermittel.

2. Verfahren zur Herstellung nach Anspruch 1, **dadurch gekennzeichnet, dass** der wässrige Extrakt der Pflanzenfasern vor dem Zusetzen des proteinhaltigen Geliermittels gefiltert wird.

3. Verfahren zur Herstellung nach Anspruch 1 oder 2, **dadurch gekennzeichnet, dass** das Pflanzenmaterial aus Miscanthus, Leinen, Rüben oder Weizen erhalten wird.

4. Verfahren zur Herstellung nach einem der vorstehenden Ansprüche, **dadurch gekennzeichnet, dass** dem wässrigen Pflanzenfaserextrakt aus Pflanzenfasern weiter Acetaldehyd zugesetzt wird.

5. Polymermaterial, das durch ein Verfahren nach einem der vorstehenden Ansprüche erhalten wird.

6. Folie, die ein Polymermaterial umfasst, das durch ein Verfahren nach einem der Ansprüche 1 bis 4 erhalten wird.

## Claims

1. A method for preparing a polymer material comprising the following steps:
- providing a plant material comprising plant fibres, said plant fibres having plant walls comprising celluloses, hemicelluloses, lignins, and protein compounds,
- grinding said plant material to obtain a ground plant product,
- hydrolysing said ground plant material, on the one hand, by submerging said material in a liquid having a pH between 6.0 and 8.0, and, on the other hand, by heating the assembly of said liquid and the plant material by means of microwaves so as to bring it to a temperature of at least 35°C, to obtain an aqueous extract of said plant fibres;
**characterised in that** said assembly of said liquid and the plant material is heated at a power between 500 W and 900 W and between 5 seconds and two minutes;
and **in that** it further comprises the following steps:
- recovering said aqueous extract of said plant fibres and adding to said aqueous extract between 8% and 20% by mass of a protein gelling agent comprising at least one polypeptide; and,
- heating the mixture of said aqueous extract and said protein gelling agent.

2. The preparation method according to claim 1, **characterised in that** said aqueous extract of said plant fibres is filtered before adding the protein gelling agent.

3. The preparation method according to claim 1 or 2, **characterised in that** said plant material is obtained from miscanthus, flax, beet or wheat.

4. The preparation method according to any of the preceding claims, **characterised in that** acetaldehyde is further added to said aqueous extract of plant fibres.

5. A polymer material obtained by a method according to any of the preceding claims.

6. A film comprising a polymer material obtained by a method according to any of claims 1 to 4.
